# EUROPEAN PATENT SPECIFICATION

(11) **EP 3 879 178 B1**
(45) Date of publication and mention of the grant of the patent: **16.08.2023**
(21) Application number: 21159205.0
(22) Date of filing: 25.02.2021
(51) Int. Cl.: F23R 3/04, F02C 3/34, F16L 7/00, F23R 3/60

(54) **GAS TURBINE COMBUSTOR SYSTEM**
GASTURBINENVERBRENNUNGSKAMMERSYSTEM
SYSTÈME DE CHAMBRE DE COMBUSTION DE TURBINE À GAZ

(30) Priority: 12.03.2020 JP 2020042964
(43) Date of publication of application: 15.09.2021
(73) Proprietor: Toshiba Energy Systems & Solutions Corporation, Saiwai-ku Kawasaki-shi Kanagawa 2120013 (JP)
(72) Inventor: Morisawa, Yuichi, Kanagawa, 212-0013 (JP); Itoh, Masao, Kanagawa, 212-0013 (JP); Iwai, Yasunori, Kanagawa, 212-0013 (JP)
(74) Representative: Hoffmann Eitle

(56) References cited:
- DE-C1- 4 211 081
- JP-A- H03 158 619
- JP-A- S57 142 423
- US-A- 4 012 061
- US-A1- 2003 178 842
- US-A1- 2014 182 294
- US-A1- 2019 145 319

## Description

### BACKGROUND

Increasing the efficiency of power generation plants is in progress in response to demands for reduction of carbon dioxide, resource conservation, and the like. Specifically, increasing the temperature of a working fluid of a gas turbine, employing a combined cycle, and the like are actively in progress. Further, research and development of collection techniques of carbon dioxide are also in progress.

Under such circumstances, a gas turbine facility including a combustor which combusts a fuel and oxygen in a supercritical CO₂ atmosphere (to be referred to as a CO₂ gas turbine facility, hereinafter) is under consideration. In this CO₂ gas turbine facility, a part of a combustion gas produced in the combustor is circulated in a system as a working fluid.

Here, in the combustor of the CO₂ gas turbine facility, flow rates of the fuel and an oxidant are regulated so as to have a stoichiometric mixture ratio (equivalence ratio 1), for example. Therefore, carbon dioxide (CO₂) obtained by removing water vapor from the combustion gas circulates in the system.

Incidentally, the equivalence ratio which is mentioned here is an equivalence ratio calculated based on a fuel flow rate and an oxygen flow rate. In other words, it is an equivalence ratio (overall equivalence ratio) when it is assumed that the fuel and the oxygen are uniformly mixed.

The circulating carbon dioxide is pressurized to a critical pressure or more by a compressor. This carbon dioxide is heated to about 700°C, for example, to be supplied to the combustor.

When this carbon dioxide at high temperatures (to be referred to as high-temperature carbon dioxide, hereinafter) is supplied through a combustor casing to the combustor, a pipe which supplies the high-temperature carbon dioxide is provided so as to be connected to or penetrate the combustor casing.

In a case of this configuration, as a metallic material constituting the combustor casing in contact with the pipe, for example, it is necessary to use an expensive Ni-based heat resistant alloy.

Thus, in order that the combustor casing is constituted by an inexpensive Fe-based heat resistant steel, the pipe which supplies the high-temperature carbon dioxide to the combustor is formed as a double-pipe structure. The double pipe includes an outer pipe and an inner pipe disposed to pass through the interior of the outer pipe.

The high-temperature carbon dioxide is supplied to the inner pipe. Carbon dioxide at a supercritical pressure which has a lower temperature than that of the high-temperature carbon dioxide (to be referred to as low-temperature carbon dioxide, hereinafter) is supplied to the outer pipe (an annular passage between the inner pipe and the outer pipe). The temperature of this low-temperature carbon dioxide is a temperature which the combustor casing is capable of resisting.

As described above, in the double pipe, the high-temperature carbon dioxide flows through the interior of the inner pipe, and the low-temperature carbon dioxide flows through the annular passage between the inner pipe and the outer pipe. This causes the inner pipe to extend further in a center axis direction of the double pipe than the outer pipe, and therefore, a thermal elongation difference occurs between the inner pipe and the outer pipe.

Due to such occurrence of the thermal elongation difference, it is not possible to fix the inner pipe to the outer pipe so as not to move. Therefore, the inner pipe is supported swingably in the center axis direction of the double pipe with respect to the outer pipe. Further, the inner pipe is supported swingably in a circumferential direction with respect to the outer pipe with the center axis of the double pipe centered.

Here, the inner pipe sometimes undergoes rotational force in the circumferential direction, which centers the center axis of the double pipe, due to the low-temperature carbon dioxide supplied to the annular passage between the inner pipe and the outer pipe. When the inner pipe undergoes the rotational force in the circumferential direction, the inner pipe rotates in the circumferential direction with the center axis centered. When the inner pipe rotates as the above, there is a concern about abrasion of a swing portion swingably supporting the inner pipe, or the like.

A gas turbine combustor system according to the preamble of claim 1 is described by US2019/145319.

### BRIEF DESCRIPTION OF THE DRAWINGS

FIG. 1 is a system diagram of a gas turbine facility including a gas turbine combustor system of a first embodiment.
FIG. 2 is a view schematically illustrating a longitudinal section of a gas turbine system according to the first embodiment.
FIG. 3 is a view enlarging and illustrating a longitudinal section of a double pip implemented within the system of the first embodiment.
FIG. 4 is a view illustrating an A-A cross section in FIG. 3.
FIG. 5 is a view illustrating a B-B cross section in FIG. 3.
FIG. 6 is a view illustrating a C-C cross section in FIG. 5.
FIG. 7 is a view enlarging and illustrating a longitudinal section of a double pipe implemented within a system of a second embodiment.
FIG. 8 is a view illustrating a D-D cross section in FIG. 7.
FIG. 9 is a view illustrating an E-E cross section in FIG. 7.
FIG. 10 is a view illustrating an F-F cross section in FIG. 9.

### DETAILED DESCRIPTION

A gas turbine combustor system according to the invention is described by claim 1.

Hereinafter, embodiments of the present invention will be described with reference to the drawings.

A double pipe includes: an outer pipe; an inner pipe inserted through an interior of the outer pipe to make a first fluid flow therethrough; and a fluid introduction part which introduces a second fluid to an annular passage between the outer pipe and the inner pipe.

The double pipe includes: a first inner pipe protruding part protruding from an outer peripheral surface of the inner pipe to a radial outside; and a first outer pipe protruding part protruding from an inner peripheral surface of the outer pipe to a radial inside, the first outer pipe protruding part having a fitting groove fitted to the first inner pipe protruding part and penetrating in an axial direction of the double pipe.

### (First embodiment)

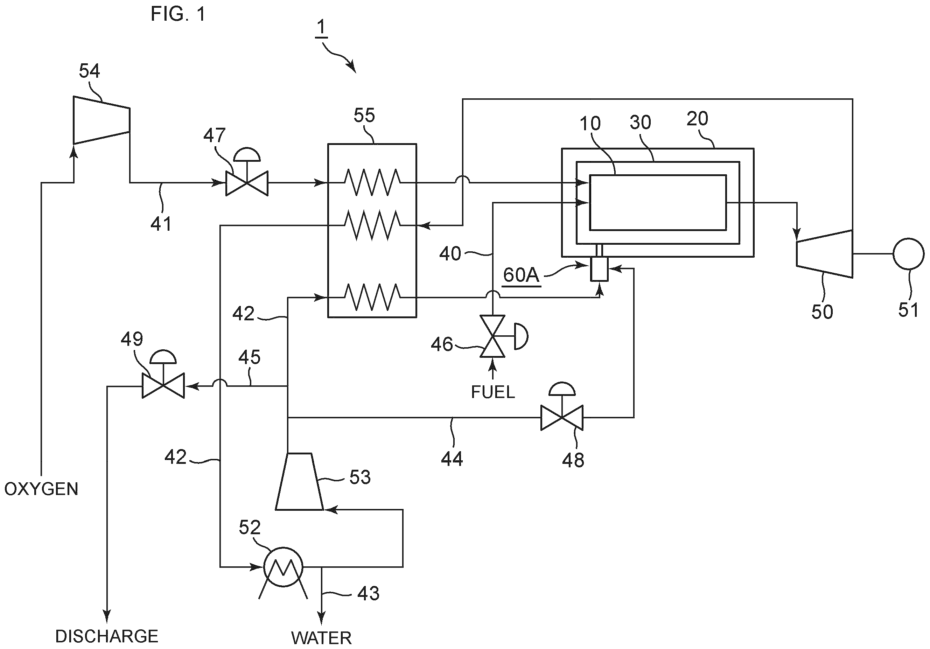

FIG. 1 is a system diagram of a gas turbine facility 1 including a double pipe 60A of a first embodiment. As illustrated in FIG. 1, the gas turbine facility 1 includes the combustor 10 which combusts a fuel and an oxidant, a pipe 40 which supplies the fuel to the combustor 10, and a pipe 41 which supplies the oxidant to the combustor 10.

The pipe 40 includes a flow rate regulating valve 46 which regulates a flow rate of the fuel to be supplied to the combustor 10. Here, as the fuel, for example, hydrocarbon such as methane or natural gas is used. Further, as the fuel, for example, a coal gasification gas fuel containing carbon monoxide, hydrogen, and the like can also be used.

The pipe 41 includes a flow rate regulating valve 47 which regulates a flow rate of the oxidant to be supplied to the combustor 10. Further, the pipe 41 is provided with a compressor 54 which pressurizes the oxidant. As the oxidant, for example, oxygen separated from the atmosphere by an air separating apparatus (not illustrated) is used. The oxidant flowing through the pipe 41 is heated by passing through a heat exchanger 55 to be supplied to the combustor 10.

Incidentally, as the oxidant, for example, a mixed gas of oxygen and carbon dioxide pressurized to a critical pressure or more (supercritical CO₂) by a later-described compressor 53 may be used. In this case, the pressurized carbon dioxide is introduced to the pipe 41 on an upstream side of the heat exchanger 55, for example.

The fuel and the oxidant guided to the combustor 10 undergo reaction (combustion) in a combustion region and are turned into a combustion gas. Here, in the gas turbine facility 1, excess oxidant (oxygen) and fuel preferably do not remain in the combustion gas discharged from the combustor 10. Thus, the flow rates of the fuel and the oxidant are regulated so as to have a stoichiometric mixture ratio (equivalence ratio 1), for example.

The gas turbine facility 1 includes a turbine 50 which is moved rotationally by the combustion gas discharged from the combustor 10. For example, a generator 51 is coupled to the turbine 50. The combustion gas discharged from the combustor 10, which is mentioned here, contains a combustion product produced from the fuel and the oxidant and carbon dioxide (a combustion gas from which water vapor has been removed) to be supplied through a later-described double pipe 60A to the combustor 10.

The combustion gas discharged from the turbine 50 is guided to the pipe 42 and cooled by passing through the heat exchanger 55. At this time, the oxidant flowing through the pipe 41 and carbon dioxide pressurized by the later-described compressor 53 to flow through the pipe 42 are heated by heat release from the combustion gas.

The combustion gas having passed through the heat exchanger 55 passes through a cooler 52. By the combustion gas passing through the cooler 52, the water vapor contained in the combustion gas is removed therefrom. At this time, the water vapor in the combustion gas condenses into water. This water is discharged through a pipe 43 to the outside, for example.

Here, as described previously, when the flow rates of the fuel and the oxidant are regulated so as to have the stoichiometric mixture ratio (equivalence ratio 1), most of components of the combustion gas from which the water vapor has been removed (dry combustion gas) are carbon dioxide. Note that, for example, a slight amount of carbon monoxide of 0.2% or less, or the like is sometimes mixed in the combustion gas from which the water vapor has been removed, but hereinafter, the combustion gas from which the water vapor has been removed is simply referred to as carbon dioxide.

The carbon dioxide is pressurized to a critical pressure or more by the compressor 53 interposed in the pipe 42 to become a supercritical fluid. A part of the pressurized carbon dioxide flows through the pipe 42 and is heated in the heat exchanger 55. The heated carbon dioxide passes through the double pipe 60A to be guided into a cylinder body 30 surrounding a periphery of the combustor 10. The temperature of the carbon dioxide having passed through the heat exchanger 55 becomes about 700°C. Note that this heated supercritical carbon dioxide is referred to as high-temperature carbon dioxide in the following.

Another part of the pressurized carbon dioxide is introduced to a pipe 44 branching off from the pipe 42. The carbon dioxide introduced to the pipe 44 is guided to the double pipe 60A as a cooling medium after its flow rate is regulated by a flow rate regulating valve 48. Note that though described in detail later, the carbon dioxide introduced to the pipe 44 flows through a passage on an outer peripheral side of the double pipe 60A.

The carbon dioxide guided from the pipe 44 to the double pipe 60A is guided between a combustor casing 20 and the cylinder body 30. The temperature of the carbon dioxide guided between the combustor casing 20 and the cylinder body 30 is about 400°C. Here, the temperature of the carbon dioxide to be supplied by the pipe 44 is lower than the temperature of the high-temperature carbon dioxide. Thus, the supercritical carbon dioxide flowing through the pipe 44 is referred to as low-temperature carbon dioxide in the following.

Meanwhile, the remaining part of the pressurized carbon dioxide is introduced to a pipe 45 branching off from the pipe 42. The carbon dioxide introduced to the pipe 45 is discharged to the outside after its flow rate is regulated by a flow rate regulating valve 49. Note that the pipe 45 functions as a discharge pipe. The carbon dioxide discharged to the outside can be utilized for EOR (Enhanced Oil Recovery) or the like employed at an oil drilling field, for example.

Next, a configuration in the combustor casing 20 and the double pipe 60A are described in detail.

First, the configuration in the combustor casing 20 is described.

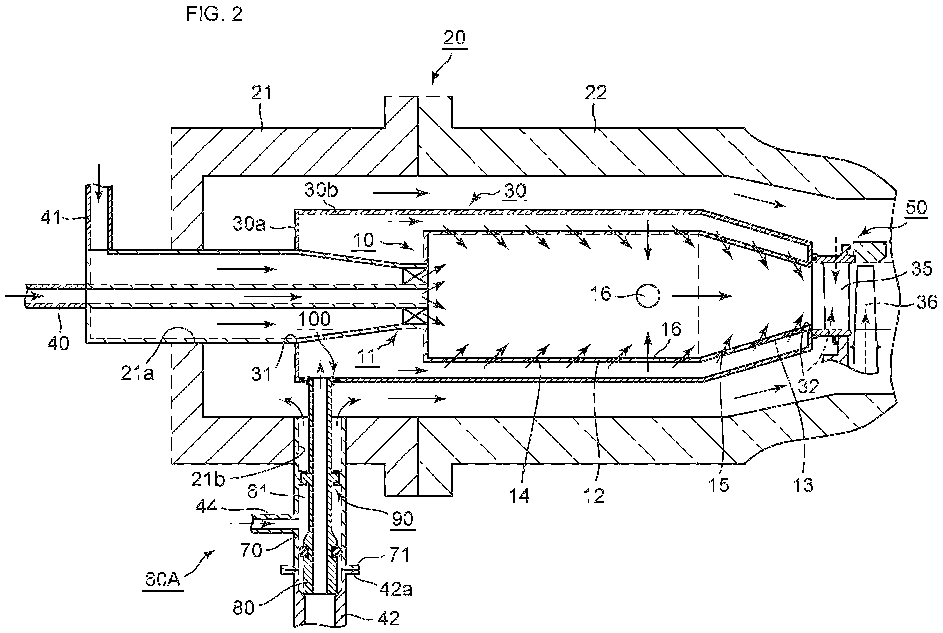

FIG. 2 is a view schematically illustrating a longitudinal section of the combustor 10 and the combustor casing 20 including the double pipe 60A of the first embodiment.

As illustrated in FIG. 2, the combustor 10 includes a fuel nozzle part 11, a combustor liner 12, and a transition piece 13 (tail pipe).

The fuel nozzle part 11 ejects the fuel supplied from the pipe 40 and the oxidant supplied from the pipe 41 into the combustor liner 12. For example, the fuel is ejected from the center and the oxidant is ejected from the periphery of the center. The combustor 10 is housed inside the combustor casing 20.

The combustor casing 20 is provided along a longitudinal direction of the combustor 10 so as to surround the combustor 10. The combustor casing 20 is divided into two parts in the longitudinal direction of the combustor 10, for example. The combustor casing 20 is constituted of an upstream-side casing 21 on an upstream side and a downstream-side casing 22 on a downstream side, for example.

The upstream-side casing 21 is constituted by a cylinder body having one end (upstream end) thereof closed and the other end (downstream end) thereof opened, for example. In the center of the one end, an opening 21a into which the fuel nozzle part 11 is inserted is formed.

Further, the double pipe 60A is provided in a side portion of the upstream-side casing 21. An outer pipe 70 of the double pipe 60A is fitted in and joined to an opening 21b formed in the side portion of the upstream-side casing 21, for example. The pipe 42 which makes the high-temperature carbon dioxide flow therethrough and the pipe 44 which makes the low-temperature carbon dioxide flow therethrough are coupled to the double pipe 60A.

The downstream-side casing 22 is constituted by a cylinder body having both ends thereof opened. One end of the downstream-side casing 22 is connected to the upstream-side casing 21, and the other end of the downstream-side casing 22 is connected to, for example, a casing surrounding the turbine 50.

As illustrated in FIG. 2, in the combustor casing 20, the cylinder body 30 which surrounds the periphery of the combustor 10 and demarcates a space between the combustor casing 20 and the combustor 10 is provided. A predetermined space exists between the combustor 10 and the cylinder body 30.

An one end (upstream end) of the cylinder body 30 is closed. In the one end, an opening 31 into which the fuel nozzle part 11 is inserted is formed. The other end (downstream end) of the cylinder body 30 is closed. In the other end, an opening 32 through which a downstream end of the transition piece 13 passes is formed.

The cylinder body 30 is formed by joining a plate-shaped lid member 30a having the opening 31 therein to a cylindrical main body member 30b, for example. An inner peripheral surface of the downstream-side opening 32 in the cylinder body 30 is in contact with an outer peripheral surface of the downstream end portion of the transition piece 13.

Further, an inner pipe 80 of the double pipe 60A is coupled to an upstream-side side portion of the cylinder body 30. Note that the double pipe 60A is not limited to being provided at one place and may be plurally provided in a circumferential direction.

Next, a configuration of the double pipe 60A is described.

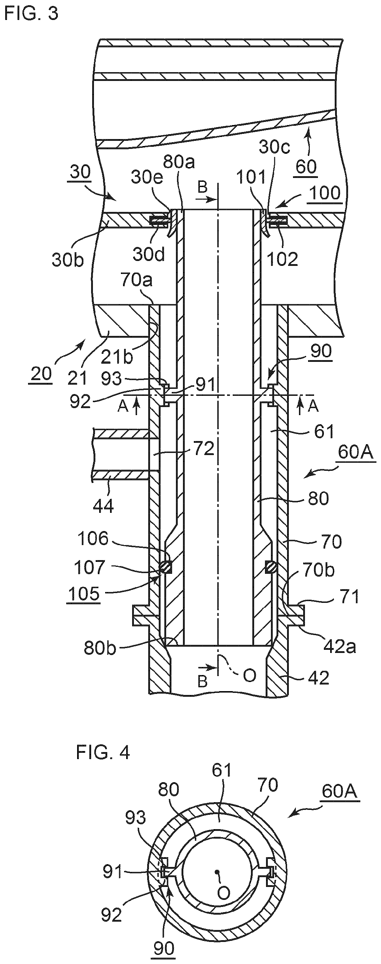

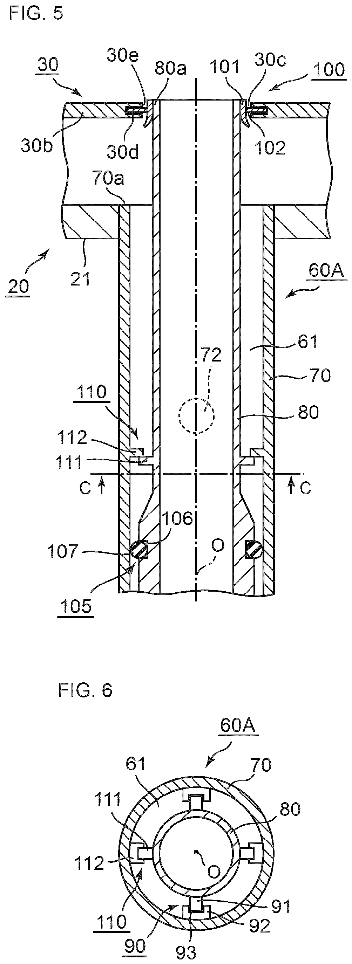

FIG. 3 is a view enlarging and illustrating a longitudinal section of the double pipe 60A of the first embodiment. FIG. 4 is a view illustrating an A-A cross section in FIG. 3. FIG. 5 is a view illustrating a B-B cross section in FIG. 3. FIG. 6 is a view illustrating a C-C cross section in FIG. 5. Here, FIG. 5 is a longitudinal section in a position displaced from the cross section illustrated in FIG. 3 by 90 degrees with a center axis O of the double pipe 60A centered.

As illustrated in FIG. 3 and FIG. 5, the double pipe 60A includes an outer pipe 70, an inner pipe 80, a circumferential rotation prevention mechanism 90, and an axial movement restriction mechanism 110.

As illustrated in FIG. 3, the outer pipe 70 is constituted by a cylindrical pipe having both ends thereof opened. One end 70a of the outer pipe 70 is fitted in and joined to the opening 21b formed in the side portion of the upstream-side casing 21. The other end 70b of the outer pipe 70 is coupled to the pipe 42. For example, by fastening a flange 71 formed at the other end 70b of the outer pipe 70 and a flange 42a formed at an end portion of the pipe 42, the outer pipe 70 and the pipe 42 are coupled.

Further, the pipe 44 is coupled to a side portion of the outer pipe 70. Then, the low-temperature carbon dioxide is supplied between the outer pipe 70 and the inner pipe 80 from the pipe 44 through an opening 72 formed in the side portion of the outer pipe 70. The pipe 44 is coupled to the outer pipe 70 on the side closer to the combustor casing 20 than a sealing portion 105.

Here, a passage between the outer pipe 70 and the inner pipe 80, to which the low-temperature carbon dioxide is introduced from the pipe 44, is referred to as an annular passage 61. Note that the low-temperature carbon dioxide to be supplied to the annular passage 61 functions as a second fluid. Further, the opening 72 of the outer pipe 70 functions as a fluid introduction part.

The upstream-side casing 21 is coupled to the outer pipe 70 constituting the annular passage 61 through which the low-temperature carbon dioxide flows as described above. Therefore, the upstream-side casing 21 is formed of an inexpensive Fe (iron)-based heat resistant steel such as, for example, CrMoV steel or CrMo steel, which is capable of resisting the temperature of the low-temperature carbon dioxide.

The inner pipe 80 is inserted through the interior of the outer pipe 70. The inner pipe 80 is preferably disposed so that a center axis of the inner pipe 80 corresponds to a center axis of the outer pipe 70, for example.

One end 80a of the inner pipe 80 passes through an opening 30c formed in the side portion of the cylinder body 30 (main body member 30b), and is supported by a support portion 100.

The support portion 100 includes a support member 101 and a holding member 102. The support member 101 is constituted by an annular member provided in the opening 30c, for example. The support member 101 supports the inner pipe swingably in an axial direction and the circumferential direction while the support member 101 is in contact with an outer periphery of the inner pipe 80.

Here, the axial direction means a direction of the center axis O of the double pipe 60A. The circumferential direction means a circumferential direction centering the center axis O of the double pipe 60A. Note that when the center axis of the inner pipe 80 and the center axis of the outer pipe 70 do not correspond to each other, the axial direction means a direction of the center axis of the inner pipe 80, for example, and the circumferential direction means a circumferential direction centering the center axis of the inner pipe 80, for example.

The holding member 102 supports the support member 101 and holds the support member 101 in a predetermined position in the opening 30c. The holding member 102 is constituted by a disc-shaped member extending from an outer peripheral surface of the support member 101 to a radial outside, for example. Here, the radial outside means a direction being perpendicular to the center axis O and going away from the center axis O.

The holding member 102 is fitted in a groove portion 30d formed in the circumferential direction on a peripheral end surface of the opening 30c of the main body member 30b, for example. Further, the holding member 102 is fitted in the groove portion 30d so as to be slightly movable in the circumferential direction, for example.

Supporting the one end 80a side of the inner pipe 80 by using the support portion 100 having such a configuration prevents the low-temperature carbon dioxide supplied between the combustor casing 20 (upstream-side casing 21) and the cylinder body 30 (main body member 30b) from flowing through the opening 30c into the cylinder body 30.

An outside diameter on the other end 80b side of the inner pipe 80 is configured to be larger than that on the one end 80a side of the inner pipe 80, as illustrated in FIG. 3, for example. Further, the other end 80b of the inner pipe 80 extends to the interior of the pipe 42. The high-temperature carbon dioxide supplied from the pipe 42 flows through the inner pipe 80. Note that the high-temperature carbon dioxide to be supplied to the inner pipe 80 functions as a first fluid.

The sealing portion 105 sealing between the inner pipe 80 and the outer pipe 70 is provided on the other end 80b side of the inner pipe 80.

The sealing portion 105 includes a groove portion 106 and a sealing member 107, for example. The groove portion 106 is constituted by an annular groove formed over the circumferential direction on an outer peripheral surface of the inner pipe 80.

The sealing member 107 is constituted by an annular member, for example. An inner peripheral portion of the sealing member 107 is fitted in the groove portion 106, and an outer periphery thereof abuts on an inner peripheral surface of the outer pipe 70. Further, the sealing member 107 is formed of a swingable member or in a swingable structure with respect to the inner peripheral surface of the outer pipe 70 when the inner pipe 80 is inserted from the other end 70b side of the outer pipe 70 into the outer pipe 70.

As the sealing member 107, for example, a metallic O-ring or piston ring, or the like is used. Note that the sealing member 107 is not particularly limited. The sealing member 107 only needs to have a configuration to seal between the inner pipe 80 and the outer pipe 70.

By including the sealing portion 105, the low-temperature carbon dioxide supplied to the annular passage 61 does not flow out to the pipe 42 side. Further, the high-temperature carbon dioxide supplied from the pipe 42 to the inner pipe 80 does not flow out to the annular passage 61.

The circumferential rotation prevention mechanism 90 prevents the inner pipe 80 from rotating in the circumferential direction. The circumferential rotation prevention mechanism 90 includes an inner pipe protruding part 91 and an outer pipe protruding part 92, as illustrated in FIG. 3 and FIG. 4. Note that the inner pipe protruding part 91 functions as a first inner pipe protruding part, and the outer pipe protruding part 92 functions as a first outer pipe protruding part.

The inner pipe protruding part 91 protrudes from the outer peripheral surface of the inner pipe 80 to the radial outside. Here, one example of including the two inner pipe protruding parts 91 is indicated. In this case, the inner pipe protruding parts 91 are disposed uniformly in the circumferential direction.

The inner pipe protruding part 91 has predetermined widths in the circumferential direction and in the axial direction. Further, the inner pipe protruding part 91 has a protrusion height to the radial outside with a degree of capable of fitting in a later-described fitting groove 93.

Incidentally, at least one circumferential rotation prevention mechanism 90 only needs to be included in the circumferential direction. Therefore, at least one inner pipe protruding part 91 only needs to be included in the circumferential direction.

The outer pipe protruding part 92 protrudes from the inner peripheral surface of the outer pipe 70 to a radial inside. Here, the radial inside means a direction being perpendicular to the center axis O and approaching the center axis O.

Further, the outer pipe protruding part 92 has the fitting groove 93 fitted to the inner pipe protruding part 91 and penetrating in the axial direction, as illustrated in FIG. 4. The fitting groove 93 is constituted by a cross-sectional U-shaped groove in a cross section perpendicular to the center axis O illustrated in FIG. 4. Note that the outer pipe protruding part 92 has predetermined widths in the circumferential direction and in the axial direction.

The fitting groove 93 is formed by penetrating the outer pipe protruding part 92 in the axial direction, thus the fitting groove 93 enables movement of the inner pipe 80 in the axial direction. On the other hand, the inner pipe protruding part 91 is fitted in the fitting groove 93, thereby preventing the rotation of the inner pipe 80 in the circumferential direction.

Here, shapes of the inner pipe protruding part 91, the outer pipe protruding part 92, and the fitting groove 93 are not particularly limited. That is, these shapes only need to be shapes in each of which the inner pipe protruding part 91 is fitted in the fitting groove 93 penetrating the outer pipe protruding part 92 in the axial direction to enable the prevention of the rotation of the inner pipe 80 in the circumferential direction.

Incidentally, here, one example of providing the circumferential rotation prevention mechanism 90 in an axial position on the side closer to the combustor 10 than an axial position to which the pipe 44 is coupled is indicated. Note that the circumferential rotation prevention mechanism 90 may be provided in an axial position on the side closer to the pipe 42 than the axial position to which the pipe 44 is coupled.

The axial movement restriction mechanism 110 restricts movement of the inner pipe 80 from a predetermined position to one side in the axial direction. Here, the axial movement restriction mechanism 110 suppresses the movement of the inner pipe 80 from the predetermined position to the combustor 10 side.

The axial movement restriction mechanism 110 includes an inner pipe protruding part 111 and an outer pipe protruding part 112, as illustrated in FIG. 5 and FIG. 6. Note that the inner pipe protruding part 111 functions as a second inner pipe protruding part, and the outer pipe protruding part 112 functions as a second outer pipe protruding part.

The inner pipe protruding part 111 protrudes from the outer peripheral surface of the inner pipe 80 to the radial outside. Here, one example of including the two inner pipe protruding parts 111 is indicated. In this case, the inner pipe protruding parts 111 are disposed uniformly in the circumferential direction. The inner pipe protruding part 111 has predetermined widths in the circumferential direction and in the axial direction.

Incidentally, at least one axial movement restriction mechanism 110 only needs to be included in the circumferential direction. Therefore, at least one inner pipe protruding part 111 only needs to be included in the circumferential direction.

The outer pipe protruding part 112 protrudes from the inner peripheral surface of the outer pipe 70 to the radial inside. Note that the outer pipe protruding part 112 and the inner pipe protruding part 111 protrude in the radial direction so as to come into contact with each other when the inner pipe 80 is moved in the axial direction.

Thus, when the inner pipe 80 is inserted into the outer pipe 70 to be moved in the axial direction, the movement of the inner pipe 80 to the combustor 10 side is restricted in an axial position in which the inner pipe protruding part 111 comes into contact with the outer pipe protruding part 112. This position in the axial direction in which the inner pipe 80 is present when the inner pipe protruding part 111 and the outer pipe protruding part 112 come into contact with each other corresponds to the predetermined position in the axial direction.

Here, the axial movement restriction mechanism 110 is provided in a circumferential position different from the circumferential position provided with the circumferential rotation prevention mechanism 90. Here, one example in which the axial movement restriction mechanism 110 and the circumferential rotation prevention mechanism 90 are disposed to be displaced in the circumferential direction by 90 degrees is indicated.

This makes it possible to avoid the contact between the inner pipe protruding part 91 of the circumferential rotation prevention mechanism 90 and the outer pipe protruding part 112 of the axial movement restriction mechanism 110 when the inner pipe 80 is inserted into the outer pipe 70 to be moved in the axial direction. This allows the inner pipe 80 to be inserted into the outer pipe 70 to the predetermined position without performing an operation to avoid the outer pipe protruding part 112.

Here, one example in which the axial movement restriction mechanism 110 is provided in the axial position different from the axial position provided with the circumferential rotation prevention mechanism 90 is indicated. Further, here, one example in which the axial movement restriction mechanism 110 is provided in the axial position on the side closer to the pipe 42 than the axial position to which the pipe 44 is coupled is indicated. Note that the axial movement restriction mechanisms 110 may be provided in the axial position on the side closer to the combustor 10 than the axial position to which the pipe 44 is coupled.

Incidentally, when the circumferential rotation prevention mechanism 90 is provided in the axial position on the side closer to the combustor 10 than the axial position to which the pipe 44 is coupled, in order to reduce a pressure loss in the annular passage 61, the axial movement restriction mechanism 110 is preferably provided in the axial position on the side closer to the pipe 42 than the axial position to which the pipe 44 is coupled.

Here, flows of the carbon dioxides introduced from the pipe 42 and the pipe 44 are described with reference to FIG. 2 to FIG. 6.

The high-temperature carbon dioxide is introduced from the pipe 42 into the inner pipe 80, as illustrated in FIG. 2 and FIG. 3. The high-temperature carbon dioxide introduced into the inner pipe 80 is introduced into the cylinder body 30. The high-temperature carbon dioxide introduced into the cylinder body 30 flows through an annular space between the combustor liner 12 and the cylinder body 30 to the downstream side. At this time, the high-temperature carbon dioxide cools the combustor liner 12 and the transition piece 13.

Then, the high-temperature carbon dioxide is introduced from, for example, holes 14, 15 of a porous film cooling part, dilution holes 16, and the like in the combustor liner 12 and the transition piece 13 into the combustor liner 12 and the transition piece 13.

Thus, the entire amount of the high-temperature carbon dioxide introduced from the inner pipe 80 is introduced into the combustor liner 12 and the transition piece 13. Note that the high-temperature carbon dioxide introduced into the combustor liner 12 and the transition piece 13 is introduced to the turbine 50 together with the combustion gas produced by the combustion.

On the other hand, the low-temperature carbon dioxide introduced from the pipe 44 to the annular passage 61 passes through the interior of the annular passage 61 provided with the circumferential rotation prevention mechanism 90 to be guided between the combustor casing 20 and the cylinder body 30.

The low-temperature carbon dioxide flowing through the annular passage 61 cools the inner pipe 80. Further, the low-temperature carbon dioxide flows around the inner pipe 80, to thus suppress heat conduction from the inner pipe 80 through which the high-temperature carbon dioxide flows to the combustor casing 20.

Here, when the low-temperature carbon dioxide is introduced from the pipe 44 to the annular passage 61, the low-temperature carbon dioxide is ejected toward a side surface of the inner pipe 80, for example. At this time, the side surface of the inner pipe 80 undergoes force of the flow. This causes rotational force in the circumferential direction to be imparted to the inner pipe 80. However, the rotation of the inner pipe 80 in the circumferential direction is prevented by the circumferential rotation prevention mechanism 90.

Further, when thermal expansion causes axial thermal elongation to the inner pipe 80, the movement of the inner pipe 80 from the predetermined position to the combustor 10 side is restricted by the axial movement restriction mechanism 110. On the other hand, since the axial movement restriction mechanism 110 does not restrict thermal elongation to the pipe 42 side, the thermal elongation of the inner pipe 80 to the pipe 42 side is slightly permitted.

The low-temperature carbon dioxide introduced between the combustor casing 20 and the cylinder body 30 flows through an annular space between the combustor casing 20 and the cylinder body 30 to the downstream side. At this time, the low-temperature carbon dioxide cools the combustor casing 20 and the cylinder body 30. This low-temperature carbon dioxide is also used for cooling stator blades 35 and rotor blades 36 of the turbine 50, for example. Such cooling causes a temperature of the combustor casing 20 to become 400°C or less, for example.

As described above, according to the double pipe 60A of the first embodiment, including the circumferential rotation prevention mechanism 90 enables the prevention of the rotation of the inner pipe 80 in the circumferential direction even though the low-temperature carbon dioxide is introduced to the annular passage 61. Further, in the portion provided with the circumferential rotation prevention mechanism 90, there is no restriction of movement of the inner pipe 80 in the axial direction.

Preventing the rotation of the inner pipe 80 in the circumferential direction as described above enables prevention of abrasion of a swing portion swingably supporting the inner pipe 80, or the like. Here, as the swing portion, the support portion 100, the sealing portion 105, and so on can be cited.

Including the axial movement restriction mechanism 110 allows the inner pipe 80 to be disposed easily in the predetermined position in the axial direction in the outer pipe 70, for example.

Further, including the axial movement restriction mechanism 110 causes the movement of the inner pipe 80 to the combustor 10 side as a whole to be restricted also when the thermal expansion causes the axial thermal elongation to the inner pipe 80.

Here, one end side and the other end side of the inner pipe 80 are free ends, and they are supported in a swingable state in the axial direction. When the thermal expansion causes the axial thermal elongation to the inner pipe 80, the inner pipe 80 on the side closer to the combustor 10 than the inner pipe protruding part 111 in contact with the outer pipe protruding part 112 is capable of the thermal elongation to the combustor 10 side. Further, the inner pipe 80 on the side closer to the pipe 42 than the inner pipe protruding part 111 is capable of the thermal elongation to the pipe 42 side. Note that the thermal elongation of the inner pipe 80 to the pipe 42 side is slightly permitted.

This makes it possible that the double pipe 60A prevents damage of the inner pipe or the like more than a double pipe whose inner pipe is fixed to its outer pipe so as not to move when the thermal expansion causes the axial thermal elongation to the inner pipe 80.

### (Second embodiment)

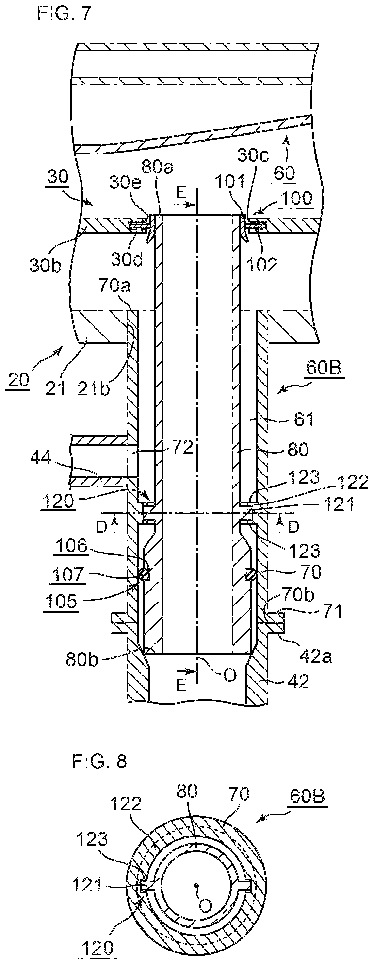

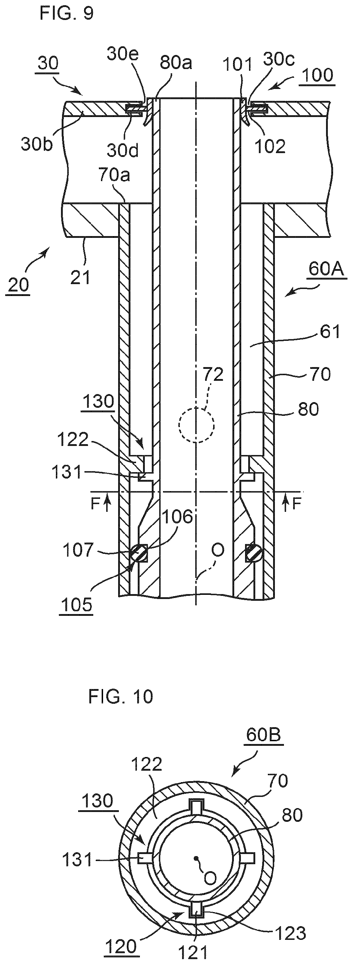

FIG. 7 is a view enlarging and illustrating a longitudinal section of a double pipe 60B of a second embodiment. FIG. 8 is a view illustrating a D-D cross section in FIG. 7. FIG. 9 is a view illustrating an E-E cross section in FIG. 7. FIG. 10 is a view illustrating an F-F cross section in FIG. 9. Here, FIG. 9 is a longitudinal section in a position displaced from the cross section illustrated in FIG. 7 by 90 degrees with a center axis O of the double pipe 60B centered.

Incidentally, in the second embodiment, the same constituent portions as those of the double pipe 60A of the first embodiment are denoted by the same reference signs, and redundant explanations are omitted or simplified.

The double pipe 60B of the second embodiment has the same configuration as that of the double pipe 60A of the first embodiment except configurations of a circumferential rotation prevention mechanism 120 and an axial movement restriction mechanism 130. Therefore, the configurations of the circumferential rotation prevention mechanism 120 and the axial movement restriction mechanism 130 are mainly described here.

As illustrated in FIG. 7 and FIG. 9, the double pipe 60B includes an outer pipe 70, an inner pipe 80, the circumferential rotation prevention mechanism 120, and the axial movement restriction mechanism 130.

Here, a configuration of the outer pipe 70 and the inner pipe 80 is the same as the configuration of the outer pipe 70 and the inner pipe 80 in the first embodiment.

The circumferential rotation prevention mechanism 120 prevents the inner pipe 80 from rotating in the circumferential direction. The circumferential rotation prevention mechanism 120 includes an inner pipe protruding part 121 and an outer pipe protruding part 122, as illustrated in FIG. 7 and FIG. 8. Note that the inner pipe protruding part 121 functions as a first inner pipe protruding part, and the outer pipe protruding part 122 functions as a first outer pipe protruding part.

The inner pipe protruding part 121 protrudes from an outer peripheral surface of the inner pipe 80 to a radial outside. Here, one example of including the two inner pipe protruding parts 121 is indicated. In this case, the inner pipe protruding parts 121 are disposed uniformly in a circumferential direction.

Incidentally, the inner pipe protruding part 121 has predetermined widths in the circumferential direction and in an axial direction. Further, the inner pipe protruding part 121 has a protrusion height to the radial outside with a degree of capable of fitting in a later-described fitting groove 123. Further, at least one inner pipe protruding part 121 only needs to be included in the circumferential direction.

The outer pipe protruding part 122 is constituted by one annular outer pipe protruding part protruding from an inner peripheral surface of the outer pipe 70 to a radial inside and formed over the circumferential direction. That is, the outer pipe protruding part 122 is constituted by an annular protruding ridge protruding from the inner peripheral surface of the outer pipe 70 to the radial inside and formed over the circumferential direction.

Further, the outer pipe protruding part 122 has a fitting groove 123 fitted to the inner pipe protruding part 121 and penetrating in the axial direction, as illustrated in FIG. 8. The fitting groove 123 is constituted by a cross-sectional U-shaped groove in a cross section perpendicular to the center axis O illustrated in FIG. 8.

The fitting groove 123 is formed by penetrating the outer pipe protruding part 122 in the axial direction, thus the fitting groove 123 enables movement of the inner pipe 80 in the axial direction. On the other hand, the inner pipe protruding part 121 is fitted in the fitting groove 123, thereby preventing the rotation of the inner pipe 80 in the circumferential direction.

Here, shapes of the inner pipe protruding part 121 and the fitting groove 123 are not particularly limited. That is, the shapes of the inner pipe protruding part 121 and the fitting groove 123 only need to be shapes in each of which the inner pipe protruding part 121 is fitted in the fitting groove 123 penetrating the outer pipe protruding part 122 in the axial direction to enable the prevention of the rotation of the inner pipe 80 in the circumferential direction.

The axial movement restriction mechanism 130 restricts movement of the inner pipe 80 from a predetermined position to one side in the axial direction. Here, the axial movement restriction mechanism 130 suppresses the movement of the inner pipe 80 from the predetermined position to a combustor 10 side.

The axial movement restriction mechanism 130 includes an inner pipe protruding part 131 and the outer pipe protruding part 122, as illustrated in FIG. 9 and FIG. 10. Note that the inner pipe protruding part 131 functions as a second inner pipe protruding part, and the outer pipe protruding part 122 functions as a second outer pipe protruding part.

Here, the outer pipe protruding part 122 of the axial movement restriction mechanism 130 is the same as the outer pipe protruding part 122 of the circumferential rotation prevention mechanism 120. That is, the outer pipe protruding part 122 of the axial movement restriction mechanism 130 and the outer pipe protruding part 122 of the circumferential rotation prevention mechanism 120 are constituted by the one annular outer pipe protruding part protruding from the inner peripheral surface of the outer pipe 70 to the radial inside and formed over the circumferential direction. In other words, as the outer pipe protruding parts in the axial movement restriction mechanism 130 and the circumferential rotation prevention mechanism 120, the one outer pipe protruding part 122 is used for both of them.

The inner pipe protruding part 131 protrudes from the outer peripheral surface of the inner pipe 80 to the radial outside. Here, one example of including the two inner pipe protruding parts 131 is indicated. In this case, the inner pipe protruding parts 131 are disposed uniformly in the circumferential direction. The inner pipe protruding part 131 has predetermined widths in the circumferential direction and in the axial direction.

Incidentally, at least one axial movement restriction mechanism 130 only needs to be included in the circumferential direction. Therefore, at least one inner pipe protruding part 131 only needs to be included in the circumferential direction.

Here, the inner pipe protruding part 131 is located on the side closer to the other end 70b than the inner pipe protruding part 121 since the inner pipe protruding part 131 abuts on the outer pipe protruding part 122 from the other end 70b side.

A configuration of the outer pipe protruding part 122 is as described previously. Note that the outer pipe protruding part 122 and the inner pipe protruding part 131 protrude in the radial direction so as to come into contact with each other when the inner pipe 80 is moved in the axial direction.

Thus, when the inner pipe 80 is inserted from the other end 70b side into the outer pipe 70 to be moved in the axial direction, the movement of the inner pipe 80 to the combustor 10 side is restricted in an axial position in which the inner pipe protruding part 131 comes into contact with the outer pipe protruding part 122. This position in the axial direction in which the inner pipe 80 is present when the inner pipe protruding part 131 and the outer pipe protruding part 122 come into contact with each other corresponds to the predetermined position in the axial direction.

Here, the axial movement restriction mechanism 130 is provided in a circumferential position different from the circumferential position provided with the circumferential rotation prevention mechanism 120. Here, one example in which the axial movement restriction mechanism 130 and the circumferential rotation prevention mechanism 120 are disposed to be displaced in the circumferential direction by 90 degrees is indicated.

The effect obtained by providing the axial movement restriction mechanism 130 and the circumferential rotation prevention mechanism 120 in the different circumferential positions is as described in the first embodiment.

Here, in the second embodiment, the circumferential rotation prevention mechanism 120 and the axial movement restriction mechanism 130 are located on the opposite side of a flow direction of the low-temperature carbon dioxide to an axial position of an opening 72 being a fluid introduction part. In other words, the circumferential rotation prevention mechanism 120 and the axial movement restriction mechanism 130 are provided in axial positions on the side closer to the pipe 42 than an axial position to which the pipe 44 is coupled.

Note that flows of the carbon dioxides introduced from the pipe 42 and the pipe 44 are the same as the flows of the carbon dioxides introduced from the pipe 42 and the pipe 44, which have been described in the first embodiment.

Further, the effect obtained by including the circumferential rotation prevention mechanism 120 and the axial movement restriction mechanism 130 is the same as the effect obtained by including the circumferential rotation prevention mechanism 90 and the axial movement restriction mechanism 110, which has been described in the first embodiment.

Here, in the double pipe 60B of the second embodiment, the circumferential rotation prevention mechanism 120 and the axial movement restriction mechanism 130 are provided in the axial positions on the side closer to the pipe 42 than the axial position to which the pipe 44 is coupled.

This prevents the circumferential rotation prevention mechanism 120 and the axial movement restriction mechanism 130 from decreasing a flow path cross-sectional area of an annular passage 61 through which the low-temperature carbon dioxide flows. Thus, it is possible to reduce a pressure loss when the low-temperature carbon dioxide flows through the annular passage 61.

Here, the configuration of the double pipe 60B of the second embodiment further includes the circumferential rotation prevention mechanism 90 of the double pipe 60A of the first embodiment, for example. In this case, the circumferential rotation prevention mechanism 90 is provided in an axial position on the side closer to the combustor 10 than the axial position to which the pipe 44 is coupled.

According to the embodiments described above, it becomes possible to prevent the rotation of the inner pipe in the circumferential direction with the center axis centered.

## Claims

1. A gas turbine combustor system comprising:
a casing (20);
a combustor (10) provided in the casing (20) to combust fuel and oxidant;
a cylinder (30) surrounding a periphery of the combustor (10) to form a first annular space and a second annular space, the first annular space being formed between the cylinder (30) and the combustor (10), the second annular space being formed between the casing (20) and the cylinder (30) ;
an inner pipe (80) penetrating the casing (20) and the cylinder (30) for guiding a first fluid into the first annular space;
an outer pipe (70) joined to the casing (20) for guiding a second fluid into the second annular space, the outer pipe (70) having the inner pipe (80) inserted through an interior of the outer pipe (70), a temperature of the second fluid guided by the outer pipe (70) being lower than a temperature of the first fluid guided by the inner pipe (80);
a fluid introduction part which introduces the second fluid to an annular passage (61) between the outer pipe (70) and the inner pipe (80), **characterized by**
a first inner pipe protruding part (91, 121) protruding from an outer peripheral surface of the inner pipe (80) to a radial outside; and
a first outer pipe protruding part (92, 122) protruding from an inner peripheral surface of the outer pipe (70) to a radial inside, the first outer pipe protruding part (92, 122) having a fitting groove (93, 123) fitted to the first inner pipe protruding part (91, 121) and penetrating in an axial direction of the outer pipe (70) to enable the prevention of the rotation of the inner pipe (80) in the circumferential direction.

2. The gas turbine combustor system according to claim 1, comprising
an axial movement restriction mechanism (110, 130) which restricts movement of the inner pipe (80) from a predetermined position to one side in the axial direction of the inner pipe (80).

3. The gas turbine combustor system according to claim 2, wherein
the axial movement restriction mechanism (110, 130) comprises:
a second inner pipe protruding part (111, 131) protruding from the outer peripheral surface of the inner pipe (80) to the radial outside; and
a second outer pipe protruding part (112, 122) protruding from the inner peripheral surface of the outer pipe (70) to the radial inside, the second outer pipe protruding part (112, 122) abutting on the second inner pipe protruding part (111, 131) in the axial direction of the outer pipe.

4. The gas turbine combustor system according to claim 2 or 3, wherein
a circumferential position in which the first inner pipe protruding part (91, 121) and the first outer pipe protruding part (92, 122) are formed is different from a circumferential position in which the axial movement restriction mechanism (110, 130) is formed.

5. The gas turbine combustor system according to claim 3, wherein:
when the first inner pipe protruding part (121), the first outer pipe protruding part (122) and the axial movement restriction mechanism (130) are located on an opposite side of a flow direction of the second fluid to an axial position of the fluid introduction part,
the first outer pipe protruding part and the second outer pipe protruding part are constituted by one annular outer pipe protruding part (122) protruding from the inner peripheral surface of the outer pipe (70) to the radial inside and formed over a circumferential direction;
the fitting groove (123) is formed in the annular outer pipe protruding part; and
a circumferential position in which the first inner pipe protruding part (121) is formed is different from a circumferential position in which the second inner pipe protruding part (131) is formed.

6. The gas turbine combustor system according to any one of claims 1 to 5, wherein
the fluid introduction part is formed in a side portion of the outer pipe (70).

## Patentansprüche

1. Gasturbinen-Verbrennungsanlage, umfassend:
ein Gehäuse (20);
einen Brenner (10), der in dem Gehäuse (20) vorgesehen ist, um Brennstoff und Oxidationsmittel zu verbrennen;
einen Zylinder (30), der eine Peripherie des Brenners (10) umgibt, um einen ersten Ringraum und einen zweiten Ringraum zu bilden, wobei der erste Ringraum zwischen dem Zylinder (30) und dem Brenner (10) gebildet ist, der zweite Ringraum zwischen dem Gehäuse (20) und dem Zylinder (30) gebildet ist;
ein inneres Rohr (80), das in das Gehäuse (20) und den Zylinder (30) eindringt, um ein erstes Fluid in den ersten Ringraum zu leiten;
ein äußeres Rohr (70), das mit dem Gehäuse (20) verbunden ist, um ein zweites Fluid in den zweiten Ringraum zu leiten, wobei das äußere Rohr (70) das innere Rohr (80) aufweist, das das durch ein Inneres des äußeren Rohres (70) eingeführt ist, eine Temperatur des zweiten Fluids, das durch das äußere Rohr (70) geleitet wird, niedriger als eine Temperatur des ersten Fuids ist, das durch das innere Rohr (80) geleitet wird, wobei das erste und das zweite Fluid superkritisches Kohlendioxid sind;
einen Fluid-Einleitungsteil, welcher das zweite Fluid in einen Ringdurchlass (61) zwischen dem äußeren Rohr (70) und dem inneren Rohr (80) einleitet, **gekennzeichnet durch**
einen ersten hervorstehenden Teil des inneren Rohres (91, 121), der aus einer äußeren peripheren Oberfläche des inneren Rohres (80) zu einer radialen Außenseite hervorsteht; und
einen ersten hervorstehenden Teil des äußeren Rohres (92, 122), der aus einer inneren peripheren Oberfläche des äußeren Rohres (70) zu einer radialen Innenseite hervorsteht, wobei der erste hervorstehende Teil des äußeren Rohres (92, 122) eine Passnut (93, 123) aufweist, die in den ersten hervorstehenden Teil des inneren Rohres (91, 121) eingepasst ist, und in eine axiale Richtung des äußeren Rohres (70) eindringt, um die Verhinderung der Drehung des inneren Rohres (80) in der Umlaufrichtung zu ermöglichen.

2. Gasturbinen-Verbrennungsanlage nach Anspruch 1, umfassend
einen Mechanismus zur Beschränkung axialer Bewegung (110, 130), welcher eine Bewegung des inneren Rohres (80) aus einer vorbestimmten Position auf eine Seite in der axialen Richtung des inneren Rohres (80) beschränkt.

3. Gasturbinen-Verbrennungsanlage nach Anspruch 2, wobei
der Mechanismus zur Beschränkung axialer Bewegung (110, 130) umfasst:
einen zweiten hervorstehenden Teil des inneren Rohres (111, 131), der aus einer äußeren peripheren Oberfläche des inneren Rohres (80) zu der radialen Außenseite hervorsteht; und
einen zweiten hervorstehenden Teil des äußeren Rohres (122), der aus der inneren peripheren Oberfläche des äußeren Rohres (70) zur radialen Innenseite hervorsteht, wobei der zweite hervorstehende Teil des äußeren Rohres (122) an den zweiten hervorstehenden Teil des inneren Rohres (111, 131) in der axialen Richtung des äußeren Rohres anschlägt.

4. Gasturbinen-Verbrennungsanlage nach Anspruch 2 oder 3, wobei
eine Umlaufposition, in der der erste hervorstehende Teil des inneren Rohres (91, 121) und der erste hervorstehende Teil des äußeren Rohres (92, 122) gebildet sind, sich von einer Umlaufposition unterscheidet, in der der Mechanismus zur Beschränkung axialer Bewegung (110, 130) gebildet ist.

5. Gasturbinen-Verbrennungsanlage nach Anspruch 3, wobei:
wenn der erste hervorstehende Teil des inneren Rohres (121), der erste hervorstehende Teil des äußeren Rohres (122) und der Mechanismus zur Beschränkung axialer Bewegung (130) sich an einer Gegenseite einer Flussrichtung des zweiten Fluids in eine axiale Position des Fluid-Einleitungsteils befinden,
der erste hervorstehende Teil des äußeren Rohres und der zweite hervorstehende Teil des äußeren Rohres aus einem ringförmigen hervorstehenden Teil des äußeren Rohres (122) bestehen, der aus der Innenumlaufoberfläche des äußeren Rohres (70) zur radialen Innenseite hervorsteht, und über einer Umlaufrichtung gebildet wird;
die Passnut (123) in dem ringförmigen hervorstehenden Teil des äußeren Rohres gebildet wird; und
eine Umlaufposition, in der der erste hervorstehende Teil des inneren Rohres (121) gebildet ist, sich von einer Umlaufposition unterscheidet, in der der zweite hervorstehende Teil des inneren Rohres (122) gebildet ist.

6. Gasturbinen-Verbrennungsanlage nach einem der Ansprüche 1 bis 5, wobei
das Fluid-Einleitungsteil in einem Seitenabschnitt des äußeren Rohres (70) gebildet ist.

## Revendications

1. Système de combustion de turbine à gaz comprenant :
un boîtier (20) ;
une chambre de combustion (10) prévue dans le boîtier (20) pour brûler le combustible et l'oxydant ;
un cylindre (30) entourant une périphérie de la chambre de combustion (10) pour former un premier espace annulaire et un second espace annulaire, le premier espace annulaire étant formé entre le cylindre (30) et la chambre de combustion (10), le second espace annulaire étant formé entre le boîtier (20) et le cylindre (30) ;
un tuyau intérieur (80) pénétrant dans le boîtier (20) et le cylindre (30) pour guider un premier fluide dans le premier espace annulaire ;
un tuyau extérieur (70) relié au boîtier (20) pour guider un second fluide dans le second espace annulaire, le tuyau extérieur (70) présentant le tuyau intérieur (80) inséré à travers un intérieur du tuyau extérieur (70), une température du second fluide guidé par le tuyau extérieur (70) étant inférieure à une température du premier fluide guidé par le tuyau intérieur (80), dans lequel le premier et le second fluides sont du dioxyde de carbone supercritique ;
une partie d'introduction de fluide qui introduit le second fluide dans un passage annulaire (61) entre le tuyau extérieur (70) et le tuyau intérieur (80), **caractérisé par**
une première partie saillante de tuyau intérieur (91, 121) faisant saillie à partir d'une surface périphérique extérieure du tuyau intérieur (80) vers un extérieur radial ; et
une première partie saillante de tuyau extérieur (92, 122) faisant saillie à partir d'une surface périphérique intérieure du tuyau extérieur (70) vers un intérieur radial, la première partie saillante de tuyau extérieur (92, 122) présentant une rainure d'ajustement (93, 123) adaptée à la première partie saillante de tuyau intérieur (91, 121) et pénétrant dans une direction axiale du tuyau extérieur (70 afin de permettre d'empêcher la rotation du tuyau intérieur (80) dans la direction circonférentielle.

2. Système de combustion de turbine à gaz selon la revendication 1, comprenant
un mécanisme de restriction du mouvement axial (110, 130) qui limite le mouvement du tuyau intérieur (80) d'une position prédéterminée vers un côté dans la direction axiale du tuyau intérieur (80).

3. Système de combustion de turbine à gaz selon la revendication 2, dans lequel
le mécanisme de restriction de mouvement axial (110, 130) comprend :
une seconde partie saillante de tuyau intérieur (111, 131) faisant saillie à partir de la surface périphérique extérieure du tuyau intérieur (80) vers l'extérieur radial ; et
une seconde partie saillante de tuyau extérieur (122) faisant saillie à partir de la surface périphérique intérieure du tuyau extérieur (70) vers l'intérieur radial, la seconde partie saillante de tuyau extérieur (122) butant sur la seconde partie saillante de tuyau intérieur (111, 131) dans la direction axiale du tuyau extérieur.

4. Système de combustion de turbine à gaz selon la revendication 2 ou 3, dans lequel
une position circonférentielle dans laquelle la première partie saillante de tuyau intérieur (91, 121) et la première partie saillante de tuyau extérieur (92, 122) sont formées est différente d'une position circonférentielle dans laquelle le mécanisme de restriction du mouvement axial (110, 130) est formé.

5. Système de combustion de turbine à gaz selon la revendication 3, dans lequel :
lorsque la première partie saillante de tuyau intérieur (121), la première partie saillante de tuyau extérieur (122) et le mécanisme de restriction de mouvement axial (130) sont situés sur un côté opposé d'une direction d'écoulement du second fluide par rapport à une position axiale de la partie d'introduction du fluide,
la première partie saillante de tuyau extérieur et la seconde partie saillante de tuyau extérieur sont constituées d'une partie saillante annulaire de tuyau extérieur (122) faisant saillie à partir de la surface périphérique intérieure du tuyau extérieur (70) vers l'intérieur radial et formée sur une direction circonférentielle ;
la rainure d'emboîtement (123) est formée dans la partie saillante annulaire du tuyau extérieur ; et
une position circonférentielle dans laquelle la première partie saillante de tuyau intérieur (121) est formée est différente d'une position circonférentielle dans laquelle la seconde partie saillante de tuyau intérieur (122) est formée.

6. Système de combustion de turbine à gaz selon l'une quelconque des revendications 1 à 5, dans lequel
la partie d'introduction de fluide est formée dans une partie latérale du tuyau extérieur (70).
